# EUROPEAN PATENT APPLICATION

(11) **EP 4 838 495 A1**
(43) Date of publication of application: **11.11.2026**
(21) Application number: 26174289.4
(22) Date of filing: 23.04.2026
(51) Int. Cl.: G07G 1/00

(54) **A SYSTEM FOR MONITORING AND ASSISTING DURING PURCHASING OPERATIONS**

(30) Priority: 06.05.2025 IT 202500010008
(71) Applicant: Okhos S.r.l., 53100 Siena (SI) (IT)
(72) Inventor: RAVEL, Sophie Marie, Siena (IT); ESPOSITO, Francesco, Siena (IT)
(74) Representative: Bruni, Giovanni

(57) **Abstract**

*System (1) for monitoring and assisting during purchasing operations, having:*
*- a mobile unit (2) configured to be mounted on a shopping trolley;*
*- a fixed unit (3) configured to be installed in a commercial environment;*
*- means of two-way communication between the mobile unit (2) and the fixed unit (3);*

*wherein the mobile unit (2) in turn is provided with:*
*- an image acquisition system with a configuration of at least two hemispherical cameras (8, 9) arranged to form a 360-degree field of view to capture wide field of view images of the surrounding environment;*
*- a processing unit (10) configured to process said images;*
*- a user interface provided with at least one display (11) and an audio system (12);*
*- means of temporary storage of the acquired data;*
*- means of authorizing payments;*

*and wherein the fixed unit (3) comprises:*
*- means of receiving data from the mobile unit (2);*
*- means of processing the received data;*
*- means of permanent storage of the processed data;*
*- means of transmitting information to the mobile unit (2);*
*- means of managing payment transactions.*

## Description

### Technical field of the invention

The present invention relates to a system and method for monitoring and assisting during purchasing operations in a commercial environment. In particular, the invention concerns a data acquisition, processing, and transmission system that facilitates the interaction between purchasers and sales staff, improving the purchasing experience and the security of operations. The invention is also applicable to other operational contexts, such as the logistics field for monitoring of operations made by operators.

### Background Art

In modern commercial environments, the purchasing experience often requires assistance and monitoring, both to facilitate customers in searching and selecting products, and to ensure the security and integrity of commercial operations. The systems currently in use have numerous limitations, including the partial coverage of commercial spaces, the discontinuity of monitoring due to blind spots, the need to use manual devices for scanning products, and the challenges associated with self-checkout systems that leave the product registration entirely up to the customer.

There is, therefore, the need for a system for monitoring and assisting during purchasing operations, that is free from the drawbacks listed above.

### Summary of the invention

The proposed invention solves the problems described above through an integrated monitoring and assisting system, consisting of a mobile unit associated with a shopping cart and a fixed unit installed in the commercial environment, which are in constant communication with each other.

The system enables the continuous monitoring of purchasing transactions, provides assistance to the buyer in product localization, facilitates the automatic scanning of the selected products, monitors the integrity of the purchasing process and provides useful data for inventory management.

According to one aspect of the present invention, a system for monitoring and assisting during purchasing operations is provided, having the characteristics set forth in the independent product claim attached to the present description.

According to another aspect of the present invention, a method is provided for monitoring and assisting during purchasing operations, having the characteristics set forth in the independent process claim attached to the present description.

Further preferred and/or particularly advantageous embodiments of the aforementioned system are described according to the characteristics set forth in the appended dependent claims.

### Short description of the drawings

The invention will now be described with reference to the accompanying drawings, which illustrate some non-limiting exemplary embodiments of the system for monitoring and assisting during purchasing operations, in which:
- figure 1 illustrates a system for monitoring and assisting during purchasing operations,
- figure 2 illustrates a mobile unit of the system of figure 1, and
- figure 3 is a logic diagram of a method for monitoring and assisting during purchasing operations.

### Detailed Description

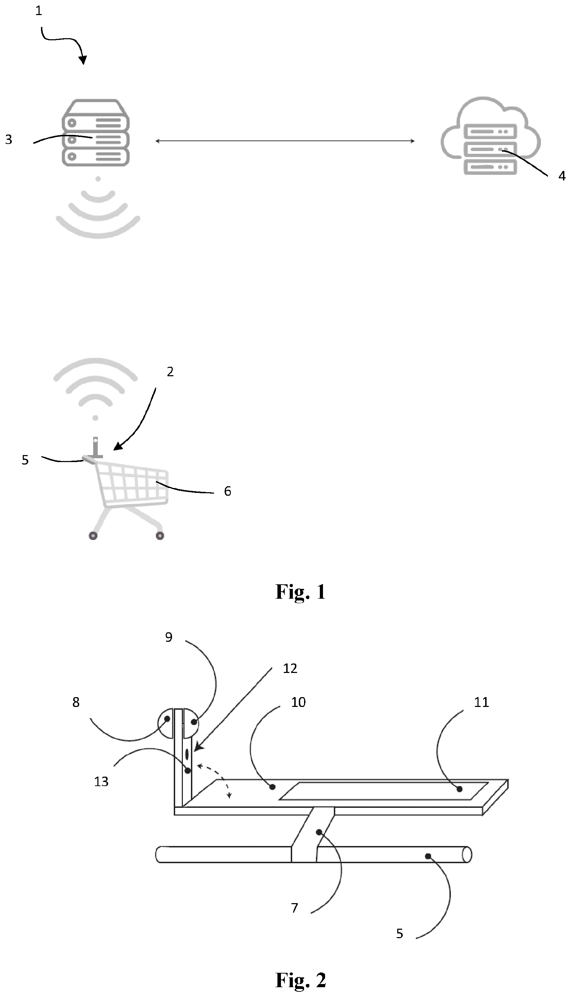

With reference to figures 1 and 2, according to the present invention, a system 1 comprises two main components installed in a store, a shopping center, or other commercial building: a mobile unit 2 and a fixed unit 3, which operate in constant two-way communication with each other.

Conveniently, the fixed unit 3 is connected to a remote in cloud computing unit 4.

The mobile unit 2 is designed to be mounted on the handle 5 of a shopping cart 6, by means of a support 7 interposed between the handle 5 of the cart 6 and the mobile unit 2 itself. The mobile unit 2 is equipped with capabilities of video acquisition, data processing, temporary storage, and communication and, in particular, it comprises:
- an image acquisition system configured to capture field-of view images of the surrounding environment;
- a processing unit 10 configured to process the acquired images;
- a user interface comprising at least one display 11 and an audio system 12;
- means for temporarily storing the acquired data;
- means for processing payments.

The fixed unit 3, installed within the commercial premises, comprises:
- means for receiving data from the mobile unit 2;
- means for processing the received data;
- means for permanently storing the processed data;
- means for transmitting information to the mobile unit;
- means for managing payment transactions.

Preferably, the image acquisition system is equipped with at least two cameras 8, 9 arranged to form a composite, wide-coverage field of view. For example, as in the configuration of figure 2, the two cameras 8, 9 are hemispherical cameras arranged to form a 360° field of view of the surrounding environment. This configuration allows for simultaneous monitoring of:
- the space in which the cart is located;
- the products present on the shelves;
- the buyer's actions, including product handling;
- the contents of the cart;
- any third-party interactions with the cart.

The configuration of cameras can be adapted to the specific needs of the commercial environment. In particular, the cameras can be arranged horizontally, with one camera pointing up and one down, or vertically, with one camera pointing to the right and one to the left of the cart. This latter configuration can be particularly advantageous for displaying products on the shelves, especially if the system is positioned on the left edge of the cart. The functioning of both hemispherical cameras 8 and 9 is considered essential for system operation, and in the event of a malfunction of one or both cameras, the system is configured to interrupt operations and indicate the need for maintenance.

The hemispherical cameras 8 and 9 are supported by a stand 13 equipped with colored LED lighting to indicate purchasing conditions.

Preferably, the processing unit 10 is an on-board computer and it is capable of identifying the products through various methods; for example, through visual recognition based upon shape, color, and size of the packaging, and/or by reading one-dimensional and two-dimensional codes present on product packaging. In the event of product identification errors, the processing unit 10 presents the buyer with a hierarchical product selection menu on the display 11, allowing the user to navigate through the categories, until selecting the specific product.

Furthermore, the processing unit 10 is able to determine the location of the cart within the commercial environment and to track the buyer's actions related to product handling.

Advantageously, the processing unit 10 includes a neural network model configured to directly process the images acquired by the hemispherical cameras 8, 9, without the need for optical distortion correction. In other words, the acquired images are processed using a neural network model specifically trained to operate directly on images acquired by hemispherical lenses, without the need for preprocessing for optical distortion correction. The neural network model is trained specifically using synthesis images that simulate the fish-eye vision, rather than real, distortion-corrected images. This innovative approach allows the model to directly learn the visual characteristics of the products and of the identification codes as they appear through the hemispherical lenses, improving the recognition accuracy in real conditions and reducing the need for computational resources for image correction.

The neural network model is updated through an integrated process that includes:
- controlled acquisition of images from multiple angles using a rotating table;
- automatic generation of lighting and positioning variants;
- distributed collection of identification data from the various carts in use;
- centralized aggregation of model updates without transferring the original data;
- periodic distribution of the model updated to mobile units;
- implementation of a feedback mechanism, to improve the recognition based on the manual corrections made by buyers;
- use of generative *"adversarial"* models (GAN) to create synthetic images of new products starting from a few real images;
- simulation of the optical characteristics of fish-eye lenses in the generative process;
- fusion of real and synthetic images for complete and balanced model training.

This dual identification capability, combined with the direct processing of distorted images, makes the system particularly robust and versatile, enabling product identification even in non optimal conditions or in the absence of readable codes.

Conveniently, the user interface display 11 is a touch screen display, and the audio system 12 of the same user interface is a voice recognition audio system 12. This enables interaction between the buyer and the user through touch input and voice commands. Through this user interface, the system can provide product location guidance, information on selected products, and general assistance during the purchasing experience. This dual interaction mode allows for a natural and fluid communication between the buyer and the system, improving the user experience and the accessibility for various types of users, including those with physical limitations.

The fixed unit 3, installed in the commercial environment, includes a server capable of receiving, processing, and storing data, as for example video sequences, coming from the mobile units. The server analyzes the received data, particularly the video sequences, also using artificial intelligence algorithms, and can report anomalies or discrepancies to security personnel. The server also provides information to the mobile unit 2, such as the location of the products inside the store. Finally, the fixed unit 3 can handle payment transactions initiated by the mobile unit 2 or by a buyer's mobile device.

The fixed unit 3 also allows for continuous monitoring of the buyer's actions, creating a complete video recording of the purchasing experience. This recording provides an objective proof of the transactions performed and can be used both for security purposes and to settle any disputes between buyers and merchants. Regarding data privacy and security, all data transmitted between mobile unit 2 and fixed unit 3 is encrypted using advanced standards (AES-256), and the faces and other personal data are blured directly in the mobile unit 2 before transmission. Video recordings are retained until verified by human operators or artificial intelligence systems, and premature deletion of a video can only be performed by an administrator, with the identity of the deleting person and the deletion being permanently recorded without verification.

The system is configured to provide buyers with access to their own video recordings, with the faces of other buyers appropriately blurred, to ensure their privacy in accordance with applicable regulations in their respective countries. Access to the full, un-blurred recordings is restricted to authorized personnel, such as security personnel, in accordance with local privacy and data protection laws.

Communication between mobile unit 2 and fixed unit 3 occurs via a high-speed radio connection, preferably based on Wi-Fi 7 or higher standards, ensuring continuous high-bandwidth data exchange throughout the purchasing process. If the connection is unavailable in some areas of the store, the system is designed to temporarily store the data in the mobile unit and transfer it to the fixed unit as soon as the connection is restored, or in any case before the buyer leaves the store.

System 1 may include visual signaling means, configured to indicate system status, in particular the data transmission status between mobile unit 2 and fixed unit 3. If complete data transfer to the fixed unit is not achieved, the system may activate security measures to prevent the buyer from leaving the store before all data has been transferred and verified. In particular, the system activates a visual signal intended for commercial environment operators. The buyer can only complete the purchasing process after an operator has verified the complete data transfer via a cable connection or has viewed the entire video, confirming with an electronic signature the absence of anomalies and deactivating the incomplete transfer signal.

The system 1 is also designed to integrate with existing inventory management systems in the commercial environment. This integration allows the buyer to be provided with up-to-date information on product availability and location within the store, and allows inventory to be updated in real time as products are selected by buyers. The mobile unit's user interface displays this information in a list format of available products, thus facilitating the purchasing experience and improving the store's operational efficiency.

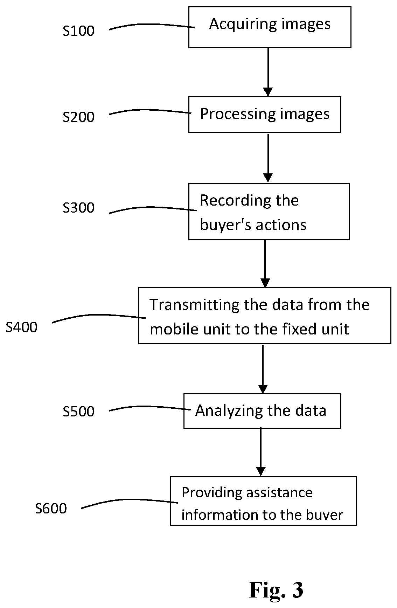

With reference to figure 3, the methodology for using system 1 to monitor and assist with purchasing operations involves the following macro-phases:
- S100 continuously acquire images of the environment surrounding the shopping cart by means of the image acquisition system, such as the two hemispherical cameras 8 and 9;
- S200 process these images to identify the products handled by the buyer using the processing unit 10;
- S300 record the buyer's actions relating to selecting and placing products in the cart;
- S400 transmit the data acquired and processed by the mobile unit 2 to the fixed unit 3;
- S500 analyze the data received at the fixed unit 3;
- S600 provide assistance information to the buyer via the user interface of the mobile unit 2.

Preferably, the method further comprises the phase of verifying the completeness of data transmission from the mobile unit 2 to the fixed unit 3, before the buyer leaves the commercial environment.

Advantageously, the method could also include a phase consisting of using images acquired during the movement of the cart, to analyze the status of the shelves and to identify product repositioning needs.

Conveniently, according to the present methodology, it is possible to compare the products identified as present in the cart with the products registered for the payment, in order to detect discrepancies.

Preferably, the method according to the present invention provides the buyer with directions on the route to follow, to reach products specified by the buyer.

Advantageously, the method also includes the phase consisting of managing the payment process through the mobile unit 2 or through a buyer's mobile device in communication with the fixed unit 3.

Preferably, the present methodology allows for interfacing with inventory management systems to verify product availability and update inventory in real time based on the products selected by buyers.

According to another aspect, the method allows for analyzing the acquired data to generate analytical information regarding buyer's behavior. The analysis could include: length of stay in specific areas of the commercial environment, products viewed, products for which additional information was requested, and the paths followed by buyers.

Finally, the method could also include providing buyers with access to their own video recordings, with the faces of the other buyers appropriately blurred, and providing full access to the recording, only to authorized personnel, in compliance with applicable privacy regulations.

The system and related methodology described above represent a significant improvement over traditional fixed monitoring systems, eliminating the problems related to blind spots and image quality variability due to the buyer's distance and orientation relative to the fixed cameras. Furthermore, the system and method integrate purchasing assistance, payment processing, and security monitoring functionality into a single solution, optimizing the purchasing experience and improving the operational efficiency of the commercial environment.

The system can be implemented not only in retail sale commercial environments, but also in different operational contexts, such as in the logistics field, to monitor and support operations conducted by warehouse workers. In such contexts, the system can provide operational guidance, verify the correctness of the procedures followed, and document operations performed, contributing to improved efficiency and error reduction.

The payment functionalities can be implemented directly in the mobile unit 2 or through integration with the buyer's mobile devices, such as smart phones or wearable devices, ensuring flexibility in implementing and using the system in different contexts and for different types of users.

The system is also designed to integrate with existing systems in the commercial environment, in particular:
- enterprise resource planning (ERP) systems for inventory management, pricing, and promotions;
- customer relationship management (CRM) systems for experience personalization and behavioral analysis;
- *"event-driven"* messaging systems to communicate status changes between systems;
- payment systems through direct connection with payment gateways and POS systems.

This integration provides buyers with up-to-date information on product availability and location within the store, and allows inventory to be updated in real time as products are selected by buyers. The mobile device's user interface displays this information in a list format of the available products, thus facilitating the purchasing experience and improving the store's operational efficiency.

The system is also capable of collecting and analyzing data related to buyers behavior, generating highly valuable analytical information for commercial operators. These analyses include, among other things:
- mapping the areas of the commercial environment where buyers linger longer;
- identifying the products most viewed by buyers;
- tracking the products for which buyers request additional information;
- analyzing the paths taken by buyers to reach specific products.

This analytical information allows commercial operators to optimize product layout, improve routes within the commercial environment, and make the purchasing experience more efficient, reducing the time required to locate desired products.

In addition to the embodiments of the invention described above, it is to be understood that numerous further variations exist. It should also be understood that these embodiments are merely exemplary and do not limit the scope of the invention, its applications, or its possible configurations. On the contrary, although the above description makes it possible for a skilled person to implement the present invention at least according to an exemplary configuration thereof, it must be understood that numerous variations of the described components are conceivable, without thereby departing from the scope of the invention, as defined in the appended claims.

## Claims

1. System (1) for monitoring and assisting during purchasing operations, comprising:
- a mobile unit (2) configured to be mounted on a shopping trolley;
- a fixed unit (3) configured to be installed in a commercial environment;
- means of two-way communication between the mobile unit (2) and the fixed unit (3);
the system (1) being **characterized in that** the mobile unit (2) comprises:
- an image acquisition system comprising a configuration of at least two hemispherical cameras (8, 9) arranged to form a 360-degree field of view to capture wide field of view images of the surrounding environment;
- a processing unit (10) configured to process said images;
- a user interface comprising at least one display (11) and an audio system (12);
- means of temporary storage of the acquired data;
- means of authorizing payments;
and **in that** the fixed unit (3) comprises:
- means of receiving data from the mobile unit (2);
- means of processing the received data;
- means of permanent storage of the processed data;
- means of transmitting information to the mobile unit (2);
- means of managing payment transactions.

2. System (1) according to claim 1, wherein the processing unit (10) is configured to:
- identifying products by visual recognition;
- reading one-dimensional and two-dimensional identification codes present on the product packaging;
- determining the position of the trolley within the commercial environment;
- tracking the actions of the buyer relating to the handling of the products.

3. System (1) according to anyone of the preceding claims, wherein the fixed unit (3) is configured to:
- receiving and storing the video sequences acquired by the mobile unit;
- analyzing said sequences using artificial intelligence algorithms;
- reporting anomalies detected during the analysis of the sequences;
- providing the mobile unit (2) with information relating to the location of the products;
- managing payment transactions initiated by the mobile unit (2) or by a mobile device of the buyer.

4. System (1) according to anyone of the preceding claims, **characterized in that** it comprises visual signaling means configured to indicate the status of the system and, in particular, the status of data transmission between the mobile unit (2) and the fixed unit (3).

5. System (1) according to anyone of the preceding claims, wherein the processing unit comprises a neural network model configured to directly process the images acquired by the hemispherical cameras, without the need for correction of optical distortions.

6. System (1) according to anyone of the preceding claims, wherein the user interface comprises a touch-screen display (11) and a voice recognition audio system (12) configured to allow interaction between the purchaser and the system by means of tactile inputs and voice commands.

7. Method for monitoring and assisting during purchase operations using the system (1) according to any of claims 1 to 6, the method comprising the steps of:
- continuously acquiring images of the environment surrounding the shopping cart;
- processing said images to identify the products handled by the buyer;
- recording the buyer's actions related to the selection and placing of products in the cart;
- transmitting the data acquired and processed by the mobile unit (2) to the fixed unit (3);
- analyzing the data received at the fixed unit (3);
- providing assistance information to the buyer via the user interface of the mobile unit (2).

8. A method according to the preceding claim, wherein the method further comprises the step of checking the completeness of the data transmission from the mobile unit (2) to the fixed unit (3) before the shopper leaves the commercial environment.

9. A method according to claim 7 or 8, wherein the method further comprises the step of using the images acquired during the movement of the cart to analyze the state of the shelves and identify the need for repositioning the products.

10. A method according to anyone of claims 7 to 9, wherein the method further comprises the step of comparing the products identified as being in the cart with the products registered for payment, in order to detect discrepancies.

11. A method according to anyone of claims 7 to 10, wherein the method further comprises the step of providing the shopper with directions on the route to follow to reach products specified by the shopper.
